# FASCICULE DE BREVET EUROPEEN

(11) **EP 2 928 088 B1**
(45) Date de publication et mention de la délivrance du brevet: **30.11.2016**
(21) Numéro de dépôt: 15161719.8
(22) Date de dépôt: 30.03.2015
(51) Int. Cl.: H04B 7/185

(54) **Procédé pour l'établissement de liaisons radiofréquences par satellite avec voie aller et retour utilisant la même bande de fréquence permettant un fonctionnement à saturation de la chaîne d'amplification du satellite.**
Verfahren zum Aufbau von Satelliten Funkverbindungen mit Hin- und Rückweg unter Verwendung des gleichen Frequenzbandes die ein Betrieb in Sättigung der Verstärkerkette des Satelliten erlaubt.
Method for establishing a satellite radiofrequency link with a forward and a return path using the same frequency band allowing operation of the satellite amplificator chain at saturation.

(30) Priorité: 01.04.2014 FR 1452860
(43) Date de publication de la demande: 07.10.2015
(73) Titulaire: Eutelsat S.A., 75015 Paris (FR)
(72) Inventeur: Le Pera, Alessandro, 92130 Issy les Moulineaux (FR); Finocchario, Daniele Vito, 75015 Paris (FR); Arcidiacono, Antonio, 75016 Paris (FR)
(74) Mandataire: Cabinet Camus Lebkiri

(56) Documents cités:
- EP-A2- 0 707 389
- WO-A2-03/103300
- US-A1- 2004 166 800
- US-A1- 2013 336 377

## Description

La présente invention concerne un procédé pour l'établissement de liaisons radiofréquences par satellite.

Actuellement, la diffusion de programmes de télévision numérique par voie satellite (par exemple selon l'une des normes DVB-S, DVB-S2 ou DVB-SH) est largement utilisée à travers le monde. De nombreux dispositifs sont installés chez des millions d'utilisateurs.

Les dispositifs installés sont majoritairement des dispositifs de réception qui comportent une unité extérieure incluant un réflecteur parabolique qui focalise les signaux hyperfréquences modulés, sur la source, appelé cornet, d'un LNB (de l'anglais « Low Noise Block » et qui se traduit par bloc de réception), le LNB transformant les signaux hyperfréquences reçus en signaux électriques en bande satellite intermédiaire afin de les transmettre, par l'intermédiaire d'un câble coaxial au décodeur satellite STB.

Le décodeur comprend un bloc de démodulation (DVB-S, DVB-S2 ou DVB-SH) qui extrait un signal modulé « utile » dans le signal modulé transmis sur le câble coaxial et démodule le signal « utile » extrait. Le signal « utile » démodulé peut, par exemple, être utilisé pour l'affichage d'images vidéo sur un écran de télévision.

Les offres de diffusion de programmes de télévision numérique par voie terrestre ou satellitaire sont aujourd'hui essentiellement purement passives, c'est-à-dire unidirectionnelles (« one-way service » en anglais).

Il peut toutefois s'avérer utile de pouvoir offrir des services nécessitant une voie retour ; c'est le cas par exemple des services interactifs (votes, consommation de contenus à accès conditionnel par échange de clefs, commandes de nouveaux services tels que de la vidéo à la demande). En outre, cette voie retour peut trouver des applications particulièrement intéressantes dans le domaine des communications de machine à machine (« Machine to machine » en anglais) ou M2M pour contrôler certains appareils (alarme, chauffage,...) et/ou récupérer des données mesurées par des capteurs ou compteurs (gaz, électricité...) présents au sein des foyers.

Une solution connue à ce problème consiste à utiliser une voie retour utilisant une connexion de type ADSL fournie par des opérateurs de téléphonie fixe (RTC ou « Réseau Téléphonique Commuté ») ou une connexion de type GPRS/UMTS fournie par des opérateurs de téléphonie mobile. Cette solution nécessite donc du matériel supplémentaire ainsi qu'un abonnement additionnel ; par ailleurs, la commutation téléphonique n'est pas particulièrement adaptée à la transmission de messages peu volumineux tels que des messages de vote ou de commande (coût relativement élevé, problèmes de saturation du réseau...). Une telle solution n'est par ailleurs pas totalement satisfaisante dans la mesure où les fonctionnalités interactives ne se basent pas sur le même type d'installation et d'équipement déjà utilisé pour la réception de la télévision par satellite.

La plupart des offres de télévision par satellite n'intègre pas de voie retour. L'interactivité par satellite peut être offerte comme un système complètement séparé du système de diffusion, mais avec des coûts assez importants et peu compatibles avec une offre de télévision. On peut toutefois citer un exemple de système de diffusion bidirectionnel de télévision par satellite décrit dans la demande de brevet WO2011076791 déposée par la demanderesse. Dans ce système, les terminaux sont à faible coût et le sous-système interactif est intégré avec le sous-système de diffusion. Ce système utilise une voie aller en bande large Ku ou Ka et une voie retour pour les terminaux terrestres dans une bande différente de la bande Ku, par exemple en bande étroite S ou en bande C.

On pourrait également concevoir une voie retour en bande Ku, mais dans une portion de la bande Ku qui n'est pas utilisée par la voie aller, pour que la voie aller ne soit pas brouillée par le signal dans la voie retour.

Il peut toutefois s'avérer particulièrement intéressant d'utiliser la même portion de bande en voie aller et en voie retour ; une telle configuration permet en effet une meilleure efficacité spectrale et donc assure une réduction en termes de coûts dans la mesure où un même répéteur (« transponder » selon la terminologie anglaise) peut être utilisé pour la voie aller et pour la voie retour, sans avoir besoin d'un répéteur dédié pour la voie retour.

Une telle configuration est notamment décrite dans le brevet US6011952 dans laquelle une station terrestre principale émet en voie aller dans une bande large tandis que des terminaux émettent à plus faible puissance en voie retour dans des sous bandes séparées les unes des autres et présentes dans la bande large utilisée pour la voie aller. Selon cette configuration, la station terrestre émettrice est également en charge de l'élimination de signal principal émis par elle-même et de la récupération des signaux transmis par les terminaux. Le fait d'utiliser la même station terrestre pour l'émission du signal principal et la récupération des signaux en voie retour entraîne un manque de flexibilité de l'architecture globale.

La technique d'élimination proposée dans le document US6011952 suppose que l'amplification des signaux au niveau du dispositif relais (qui peut être le répéteur d'un satellite) est réalisée avec une chaîne d'amplification du répéteur fonctionnant uniquement en régime linéaire. Un tel fonctionnement avec des effets exclusivement linéaires implique donc que la chaîne d'amplification (incluant par exemple des tubes à ondes progressives ou TWTA « travelling wave tube amplifier » selon la terminologie anglaise) du répéteur ne peut pas fonctionner proche de la saturation ou à saturation (situations dans lesquelles apparaissent des effets non linéaires). L'utilisation d'un fonctionnement à saturation peut pourtant s'avérer particulièrement intéressant (voire indispensable) lorsqu'on transmet des signaux de type broadcast tels que des signaux TV. En effet, pour une application telle que la diffusion de télévision, il est très important de minimiser la taille des antennes de réception et de maximiser la résistance à la pluie (donnée par la marge dans le bilan de liaison). Pour obtenir ces effets, le répéteur satellitaire doit être utilisé très proche de la saturation. Pour mémoire, les amplificateurs utilisés dans les répéteurs de satellite présentent un comportement non linéaire lorsqu'on les utilise avec des niveaux de puissances élevées (saturation de la puissance). Ces effets non linéaires peuvent produire une distorsion du signal en sortie, des fréquences harmoniques ou des signaux d'intermodulation dans le cas de multiporteuses. Dans le domaine linéaire d'un tube à ondes progressives, la puissance de sortie en fin de tube est proportionnelle à la puissance d'entrée. La saturation apparaît lorsque la puissance de sortie n'augmente plus linéairement avec la puissance d'entrée. En d'autre terme, la caractéristique de puissance d'entrée sur puissance de sortie, également désignée par modulation d'amplitude sur amplitude (AM/AM) n'est plus linéaire lorsque le rendement de l'amplificateur est maximum.

Outre les effets de compression du gain, les amplificateurs de puissance présentent également des effets de modulation d'amplitude sur phase (AM/PM) non linéaires.

La saturation de la puissance de sortie va en effet de pair avec un changement de la phase de l'onde. Lorsque l'on reste dans le domaine linéaire, la variation du déphasage avec la puissance d'entrée reste faible, mais lorsque l'on s'approche de la saturation, donc du maximum de puissance que l'amplificateur peut fournir, les deux effets de conversion AM/PM (« AM/PM conversion » - kp) et de transfert AM/PM (« AM/PM transfer » - kt) vont se manifester.

La présence de ces forts effets dus à la saturation du répéteur satellitaire empêche l'utilisation de la technique d'élimination décrite dans le document US6011952 dans le contexte d'un système de diffusion de télévision par satellite.
Voir aussi WO 03/103300 A2 (Thomson Licensing). Dans ce contexte, la présente invention vise à fournir un procédé pour l'établissement de liaisons radiofréquences par satellite permettant également d'assurer l'émission en voie retour de signaux radioélectriques hyperfréquences de façon efficace en termes de performances, facilement adaptable à un système de diffusion préexistant, utilisant la même bande de fréquence en voie aller et en voie retour, permettant l'utilisation de deux stations terrestres indépendantes pour les deux voies, et permettant un fonctionnement de la chaîne d'amplification du répéteur du satellite à saturation ou proche de la saturation.

A cette fin, l'invention propose un procédé pour l'établissement de liaisons radiofréquences dans un réseau de télécommunication comportant :
- un satellite de télécommunication comportant un répéteur pour la réception de signaux situés dans une plage déterminée de fréquences en voie montante à l'intérieur d'une bande de fréquences d'utilisation en voie montante (par exemple une partie de la bande Ku dédiée à la voie montante, dite « Ku uplink »), l'amplification desdits signaux, la conversion en fréquence desdits signaux et la transmission vers la terre desdits signaux situés dans une plage déterminée de fréquences en voie descendante à l'intérieur d'une bande de fréquences d'utilisation en voie descendante (par exemple une autre partie de la bande Ku dédiée à la voie descendante, dite « Ku downlink »);
- une station terrestre principale comportant des moyens de diffusion vers ledit satellite de télécommunication de signaux modulés selon un premier protocole et occupant au moins une portion de ladite plage de fréquences en voie montante ;
- une pluralité de terminaux interactifs, chacun desdits terminaux interactifs comportant des moyens pour recevoir les signaux émis par ledit répéteur en provenance de ladite station terrestre principale, et des moyens pour émettre vers ledit satellite de télécommunication des signaux modulés selon un second protocole et occupant au moins une partie de ladite portion de ladite plage de fréquences en voie montante, ledit second protocole étant différent du premier protocole et étant un protocole à étalement de spectre ;
- une station terrestre interactive comportant des moyens pour recevoir les signaux émis par ledit répéteur en provenance des terminaux interactifs et de la station terrestre principale ;
   ledit procédé comportant les étapes suivantes :
   - émission par ladite station terrestre principale d'un signal modulé selon le premier protocole et occupant ladite portion de la plage de fréquences en voie montante;
   - émission par lesdits terminaux interactifs d'une pluralité de signaux modulés selon le second protocole et occupant au moins une partie de ladite portion de ladite plage de fréquences en voie montante de sorte que ladite pluralité de signaux est superposée en fréquence au signal diffusé par ladite station terrestre;
   - réception par ledit satellite desdits signaux modulés selon le second protocole et dudit signal modulé selon le premier protocole, lesdits signaux modulés selon le second protocole étant reçus par ledit satellite de télécommunication avec une amplitude totale inférieure à l'amplitude du signal diffusé par ladite station terrestre principale et lesdits signaux modulés selon le second protocole étant reçus par ledit satellite de télécommunication avec des amplitudes différentes ;
   - passage desdits signaux modulés selon le second protocole et dudit signal modulé selon le premier protocole au sein dudit répéteur, l'ensemble desdits signaux étant amplifiés avec des effets non linéaires par ledit répéteur ;
   - transmission par ledit satellite vers la terre d'un signal agrégé comportant lesdits signaux modulés selon le second protocole et ledit signal modulé selon le premier protocole amplifiés par ledit répéteur ;
   - réception par lesdits terminaux interactifs dudit signal agrégé et démodulation du signal émis par la station terrestre principal modulé selon le premier protocole ;
   - réception par ladite station terrestre interactive dudit signal agrégé, dit signal agrégé initial ;
   - élimination, par ladite station terrestre interactive, au sein dudit signal agrégé initial dudit signal modulé selon le premier protocole de sorte qu'on obtient un signal agrégé retraité ;
      ledit procédé comportant également :
      - une étape i) de démodulation par ladite station terrestre interactive, à partir dudit signal agrégé retraité, des signaux modulés selon le second protocole présentant l'amplitude la plus élevée parmi l'ensemble des signaux modulés selon le second protocole présents dans le signal agrégé retraité ;
      - une étape ii) de re-modulation selon ledit second protocole par ladite station terrestre interactive desdits signaux démodulés à l'étape précédente ;
      - une étape iii) de génération par ladite station terrestre interactive d'un signal incluant ledit signal modulé selon le premier protocole et lesdits signaux re-modulés selon le second protocole auxquels sont appliqués les effets linéaires et non linéaires de l'amplification du répéteur ;
      - une étape iv) d'élimination au sein dudit signal agrégé initial dudit signal simulé lors de l'étape précédente de sorte qu'on obtient un nouveau signal agrégé retraité
         les étapes i) à iv) étant réitérées sur le nouveau signal agrégé retraité, le niveau d'interférence au sein du signal agrégé retraité diminuant à chaque itération.

Grâce à l'invention, on utilise avantageusement une même bande de fréquences (ou partie de bande de fréquences), par exemple et de façon non limitative une partie de la bande de fréquences Ku dédiée à la voie montante, pour émettre des signaux broadcast de diffusion tels que des signaux de télévision en voie aller dédiés à des terminaux existants et à des terminaux adaptés (dits terminaux interactifs), et des signaux émis en voie retour par lesdits terminaux interactifs.

Au-delà de l'utilisation d'une même bande et contrairement à la configuration du document de brevet US6011952, on utilise ici des signaux (à la fois en voie aller et en voie retour) superposés sur une même bande (et non séparés selon différents canaux de fréquences) ; pour ce faire, le procédé utilise deux types de protocole, chaque protocole étant défini par une technique de modulation/démodulation et un codage particulier, par exemple un protocole basée sur une technologie éprouvée en voie aller (basée par exemple sur un standard DVB-S, DVB-S2 ou DVB-SH) et un protocole en voie retour basée sur un protocole à étalement de spectre, telle qu'un protocole à accès aléatoire multiple à étalement de bande par modulation du type SPREAD ALOHA utilisant des techniques d'élimination d'interférences. Un tel protocole est par exemple décrit dans le document US2010/0054131 (del Rio Herrero et al.).

Une autre différence par rapport à la configuration du document de brevet US6011952 est que les terminaux interactifs n'émettent pas tous avec la même puissance de sorte que les signaux reçus par la station terrestre interactive, bien que superposés dans une même bande de fréquences, n'ont pas tous la même amplitude. En outre, le signal principal de diffusion présente une amplitude plus élevée que l'amplitude cumulée des signaux émis par les terminaux interactifs. Le principe de l'invention repose sur une élimination progressive des signaux au sein du signal agrégé initial reçu par la station terrestre interactive. Ainsi, on commence par détecter et supprimer le signal broadcast principal ; on est alors capable de détecter et supprimer les signaux émis par les terminaux interactifs présentant l'amplitude la plus élevée et ainsi de suite. À chaque itération, de nouveaux signaux (avec une amplitude plus faible) deviennent détectables parce que le niveau d'interférence a été réduit. Une particularité de l'invention consiste à affiner l'élimination de l'ensemble des signaux au cours du procédé en prenant notamment en compte, en plus des effets linéaires, les effets non linéaires de la chaîne d'amplification à bord du satellite. Pour ce faire, à chaque étape d'élimination on émule, au niveau de la station terrestre interactive, un signal agrégé comportant l'ensemble des signaux démodulés ainsi que le signal principal en prenant en compte les effets non linéaires (par exemple liés aux effets AM/AM, AM/PM) et c'est ce nouveau signal émulé que l'on prendra en compte pour effectuer l'élimination. On comprend aisément que l'opération consistant à faire passer dans un simulateur (simulant notamment l'amplification à bord du satellite) l'ensemble des signaux, et non chaque signal l'un après l'autre, va permettre d'avoir une approche beaucoup plus proche de la réalité des effets non linéaires. Une telle approche visant à prendre en compte les effets non linéaires permet de travailler à plus forte puissance au niveau du répéteur (i.e. proche de la saturation ou à saturation).

On notera que même si l'invention peut fonctionner avec une station terrestre principale située à côté de la station terrestre interactive (elles peuvent même ne constituer qu'une seule et même station), il peut être particulièrement intéressant d'avoir une station terrestre interactive localisée à un autre endroit, la récupération progressive des signaux émis par les terminaux interactifs n'ayant aucune raison de se faire au même endroit que la diffusion du signal broadcast.

Le procédé selon l'invention peut également présenter une ou plusieurs des caractéristiques ci-dessous, considérées individuellement ou selon toutes les combinaisons techniquement possibles :
- ledit réseau de télécommunication comporte une pluralité de terminaux non interactifs de réception uniquement, chacun desdits terminaux non interactifs comportant des moyens pour recevoir les signaux émis par ledit répéteur en provenance de ladite station terrestre principale, ledit procédé comportant une étape de réception par lesdits terminaux non interactifs dudit signal agrégé et de démodulation du signal émis par la station terrestre principal modulé selon le premier protocole ;
- certains desdits terminaux non interactifs étaient déjà installés et opérationnels avant la mise en service des terminaux interactifs ;
- ledit second protocole est un protocole à accès aléatoire multiple asynchrone ou synchrone ;
- ledit premier protocole est mis en oeuvre selon l'une des normes suivantes :
   o DVB-S ;
   o DVB-S2 ;
   o DVB-SH ;
- ladite bande de fréquences d'utilisation en voie montante appartient à la bande Ku ou la bande Ka ;
- ladite station terrestre principale est localisée en un lieu différent de ladite station terrestre interactive ;
- les effets de l'amplification du répéteur de l'étape iii) incluent un ou plusieurs des effets suivants :
   o effet non linéaire de la modulation d'amplitude sur amplitude AM/AM ;
   o effet non linéaire de la modulation d'amplitude sur phase AM/PM ;
   o effet linéaire de la réponse du gain en fonction de la fréquence pour le signal modulé selon le premier protocole ;
   o effet linéaire de la réponse du gain en fonction de la fréquence pour les signaux modulés selon le second protocole ;
- le procédé selon l'invention comporte une étape d'envoi par ladite station terrestre principale d'informations de signalisation vers lesdits terminaux interactifs ;
- l'étape d'envoi desdites informations de signalisation consiste à informer lesdits terminaux d'un niveau ou d'une plage de niveaux de puissance d'émission à utiliser ;
- le processus itératif s'arrête lorsque le nombre d'itérations a atteint une valeur seuil donnée ou lorsqu'une nouvelle itération ne permet pas de détecter et démoduler de nouveaux signaux au sein dudit signal agrégé retraité ;
- le signal agrégé reçu est échantillonné, lesdits échantillons étant mémorisés dans un espace mémoire, et les opérations d'élimination des signaux détectés et démodulés étant effectués en modifiant successivement le contenu dudit espace de mémoire à chaque arrêt du processus itératif ;
- ladite étape d'élimination par ladite station terrestre interactive dudit signal modulé selon le premier protocole comporte les étapes suivantes (ces étapes sont particulièrement avantageuse lorsque la station terrestre principale est localisée en un lieu différent de la station terrestre interactive) :
   o une étape de démodulation par ladite station terrestre interactive, à partir dudit signal agrégé, du signal modulé selon le premier protocole ;
   o une étape de re-modulation selon ledit premier protocole par ladite station terrestre interactive dudit signal démodulé à l'étape précédente ;
   o une étape de génération par ladite station terrestre interactive d'un signal incluant ledit signal re-modulé selon le premier protocole auxquels sont appliqués les effets linéaires et non linéaires de l'amplification du répéteur ;
   o une étape d'élimination au sein dudit signal agrégé initial dudit signal simulé lors de l'étape précédente de sorte qu'on obtient ledit signal agrégé retraité.

La présente invention a également pour objet un réseau de télécommunication pour la mise en oeuvre du procédé selon l'invention comportant :
- un satellite de télécommunication comportant un répéteur pour la réception de signaux situés dans une plage déterminée de fréquences en voie montante à l'intérieur d'une bande de fréquences d'utilisation en voie montante, l'amplification desdits signaux, la conversion en fréquence desdits signaux et la transmission vers la terre desdits signaux situés dans une plage déterminée de fréquences en voie descendante à l'intérieur d'une bande de fréquences d'utilisation en voie descendante;
- une station terrestre principale comportant des moyens de diffusion vers ledit satellite de télécommunication de signaux modulés selon un premier protocole et occupant au moins une portion de ladite plage de fréquences en voie montante ;
- une pluralité de terminaux interactifs, chacun desdits terminaux interactifs comportant des moyens pour recevoir les signaux émis par ledit répéteur en provenance de ladite station terrestre principale, et des moyens pour émettre vers ledit satellite de télécommunication des signaux modulés selon un second protocole et occupant au moins une partie de ladite portion de ladite plage de fréquences en voie montante de sorte que ladite pluralité de signaux est superposée en fréquence au signal diffusé par ladite station terrestre, ledit second protocole étant différent du premier protocole et étant un protocole à étalement de spectre, lesdits signaux modulés selon le second protocole étant reçus par ledit satellite de télécommunication avec une amplitude totale inférieure à l'amplitude du signal diffusé par ladite station terrestre principale et lesdits signaux modulés selon le second protocole étant reçus par ledit satellite de télécommunication avec des amplitudes différentes ;
- une station terrestre interactive comportant des moyens pour recevoir les signaux émis par ledit répéteur en provenance des terminaux interactifs et de la station terrestre principale ;
   ledit réseau étant caractérisé en ce que :
   - ledit satellite comporte en outre des moyens de transmission vers la terre d'un signal agrégé comportant lesdits signaux modulés selon le second protocole et ledit signal modulé selon le premier protocole amplifiés par ledit répéteur ;
   - lesdits terminaux interactifs comportent des moyens de réception dudit signal agrégé et de démodulation du signal émis par la station terrestre principal modulé selon le premier protocole ;
   - ladite station terrestre interactive comporte :
      o des moyens de réception dudit signal agrégé, dit signal agrégé initial ;
      o des moyens d'élimination au sein dudit signal agrégé initial dudit signal modulé selon le premier protocole de sorte qu'on obtient un signal agrégé retraité ;
      o des moyens de démodulation, à partir dudit signal agrégé retraité, des signaux modulés selon le second protocole présentant l'amplitude la plus élevée parmi l'ensemble des signaux modulés selon le second protocole présents dans le signal agrégé retraité ;
      o des moyens de re-modulation selon ledit second protocole desdits signaux démodulés ;
      o des moyens de génération d'un signal incluant ledit signal modulé selon le premier protocole et lesdits signaux re-modulés selon le second protocole auxquels sont appliqués les effets linéaires et non linéaires de l'amplification du répéteur ;
      o des moyens d'élimination au sein dudit signal agrégé initial dudit signal simulé de sorte qu'on obtient un nouveau signal agrégé retraité.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 représente schématiquement un réseau de télécommunication pour la mise en oeuvre du procédé selon l'invention;
- la figure 2 représente schématiquement la répartition en fréquence des signaux transmis par la station terrestre principale et par les terminaux interactifs dans le procédé selon l'invention ;
- la figure 3 illustre les différentes étapes du procédé selon l'invention.

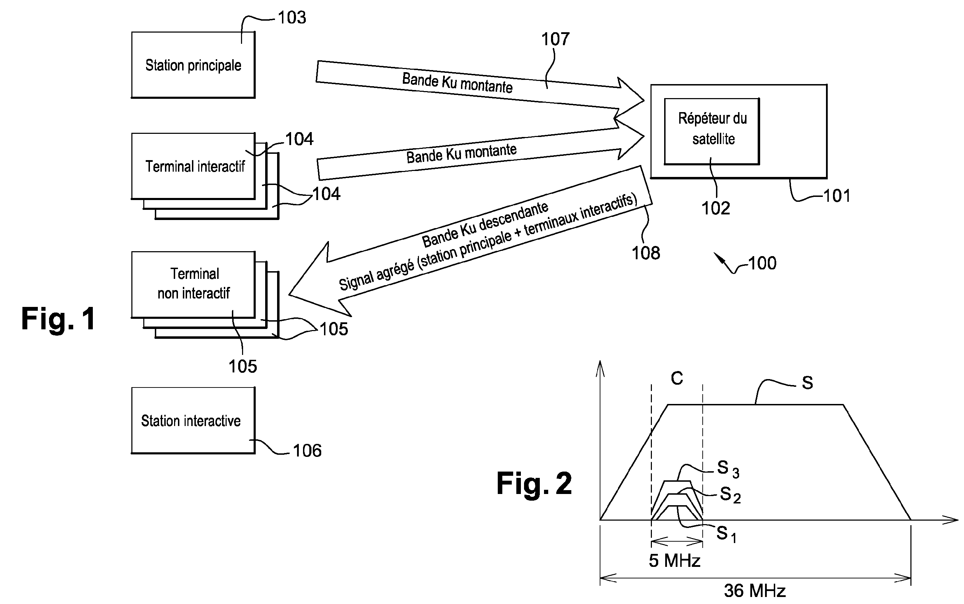

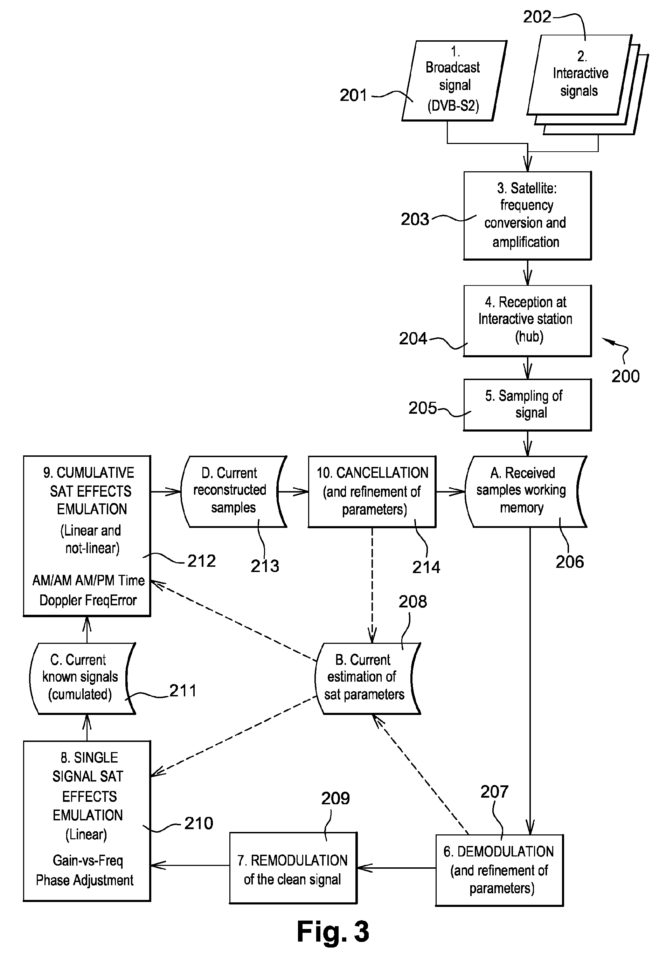

La figure 1 représente de manière schématique un réseau 100 de télécommunication selon l'invention. En parallèle, les principales étapes du procédé 200 selon l'invention (notamment les étapes de traitement au niveau de la station terrestre interactive 106) sont illustrées sur la figure 3.

Le réseau de télécommunication 100 comporte :
- un satellite de télécommunication 101 comportant au moins un répéteur 102 (étant entendu que le satellite comporte généralement une pluralité de répéteurs 102) ;
- une station terrestre principale 103 ;
- une pluralité de terminaux interactifs 104;
- une pluralité de terminaux non interactifs 105 de réception uniquement ;
- une station terrestre interactive 106.

On notera que l'un des avantages de l'invention est de pouvoir s'adapter à un réseau de télécommunication existant et incluant exclusivement des terminaux interactifs et d'y inclure des terminaux incluant des moyens interactifs sans perturber le fonctionnement du réseau et la réception de signaux tels que les signaux de télévision par les terminaux non interactifs.

La station terrestre principale est configurée pour diffuser (étape 201), en voie montante vers le satellite 101, des signaux modulés selon une modulation utilisant par exemple un protocole fonctionnant selon la norme DVB-S2 (ETSI EN 302 307 Digital Video Broadcasting (DVB) ; Second generation framing structure, channel coding and modulation systems for Broadcasting, Interactive Services, News Gathering and other broadband satellite applications (DVB-S2)).

Chaque répéteur 102 du satellite 101 est un émetteur/récepteur qui émet des signaux automatiquement lorsqu'il reçoit certains signaux prédéterminés. Le terme « répéteur » pour un satellite est une unité de traitement du signal qui utilise une chaîne unique d'amplification à haute puissance. Chaque répéteur traite une plage définie de fréquences (appelée aussi « largeur de bande » pouvant varier de quelques dizaines de MHz à quelques centaines de MHz) centrée sur une fréquence donnée et avec une polarisation donnée du signal reçu. La plage de fréquences du répéteur se situe à l'intérieur d'une bande 107 de fréquences d'utilisation en voie montante utilisant une partie dédiée à la voie montante de la bande Ku (« Ku uplink » que nous désignerons par la terminologie bande d'utilisation en voie montante).

Les signaux émis par la station terrestre principale 103 sont transmis sur une portion de la plage de fréquences du répéteur 102. Ces signaux sont par exemple des signaux de télévision.

Chaque répéteur comporte des moyens pour changer la fréquence et éventuellement la polarisation et pour amplifier les signaux qu'il reçoit de la terre et des moyens pour les réémettre vers la terre. Un satellite comprend plusieurs répéteurs, chacun pouvant supporter un ou plusieurs canaux de communication. Les répéteurs 102 sont par exemple des répéteurs ayant une largeur de bande de 36 MHz (i.e. la plage de fréquences a une largeur de bande de 36 MHz) apte à traiter des signaux DVB-S2 sur une porteuse principale de 36MHz. En faisant l'hypothèse que les signaux émis par la station terrestre principale 103 occupe toute la plage de fréquence de 36 MHz, un tel signal S sur une porteuse principale de 36 MHz est illustré en figure 2.

Les terminaux interactifs 104 comportent des moyens pour émettre, en voie montante vers le satellite 101, des signaux modulés au moyen d'un modulateur fonctionnant par exemple suivant un protocole asynchrone à accès aléatoire multiple à étalement de bande par modulation du type SPREAD ALOHA optimisé pour que la station terrestre interactive 106 puisse utiliser des moyens d'élimination d'interférences (un tel protocole est par exemple décrit dans le document US2010/0054131 (del Rio Herrero et al.)). Les signaux transmis par les terminaux interactifs 104 (étape 202) sont des signaux de voie retour, par exemple des signaux de retour relatifs à des services interactifs liés à la diffusion TV (souscription d'un abonnement, votes, consommation de contenus à accès conditionnel par échange de clefs, commandes de nouveaux services tels que de la vidéo à la demande).

Ces signaux sont transmis sur un canal C situé à l'intérieur de la portion utilisée pour les signaux diffusés et donc à l'intérieur de la plage de fréquences en voie montante du répéteur 102. Le canal C illustré en figure 2 a par exemple une largeur de 5 MHz. Plusieurs signaux S1, S2 et S3 sont représentés sur la figure 2.

Selon l'invention, la somme des amplitudes des signaux reçus des terminaux interactifs 104 est inférieure à l'amplitude du signal S reçu de la station terrestre principale 103. En outre, selon l'invention, il convient que les signaux reçus des terminaux interactifs 104 ne présentent pas tous la même amplitude : ainsi, le signal S1 a une amplitude plus faible que le signal S2 qui a lui-même une amplitude plus faible que le signal S3.

Le signal S transmis par la station terrestre principale 103 et les signaux S1, S2, S3 transmis par les terminaux interactifs 104 sont reçus et traités par le répéteur 102 dédié à la plage de fréquence correspondante ; ledit répéteur 102 va amplifier les signaux au moyen de sa chaîne d'amplification incluant par exemple des tubes à ondes progressives TWTA d'un amplificateur et décaler en fréquences lesdits signaux (étape 203). Le signal agrégé ainsi obtenu (incluant l'ensemble des signaux amplifiés et décalés en fréquence) est ensuite retransmis vers la terre.

Pour transmettre ce signal agrégé vers la terre, le répéteur 102 utilise par exemple une partie 108 dédiée à la voie descendante de la bande Ku (« Ku downlink » que nous désignerons par la terminologie bande de fréquences d'utilisation en voie descendante).

On notera que la chaîne d'amplification du répéteur 102 fonctionne ici à saturation ou très proche de la saturation afin de transmettre efficacement les signaux de type broadcast tels que des signaux TV. Dans cette configuration, comme évoqué plus haut, les amplificateurs utilisés dans le répéteur 102 présentent un comportement non linéaire (i.e. la puissance de sortie n'augmente plus linéairement avec la puissance d'entrée). Outre les effets de compression du gain (AM/AM), les amplificateurs utilisés dans le répéteur 102 présentent également des effets de modulation d'amplitude sur phase (AM/PM) non linéaires.

Le signal agrégé transmis vers la terre par le répéteur 102 est reçu par :
- les terminaux interactifs 104 ;
- les terminaux non interactifs 105 ;
- la station interactive 106.

Les terminaux interactifs 104 et non interactifs 105 comportent avantageusement chacun un démodulateur de signaux modulés selon la norme DVB-S2 de sorte que chaque terminal peut récupérer le signal de télévision émis par la station principale 103. Le niveau du signal émis par la station principale 103, par rapport au bruit et au niveau agrégé de puissance de tous les terminaux, a préférentiellement un rapport « signal sur bruit » supérieur au seuil de démodulation requis par la première modulation utilisé (i.e. par exemple une modulation utilisant un protocole fonctionnant selon la norme DVB-S2).

On notera que, selon le mode de réalisation particulièrement avantageux décrit, la station terrestre principale 103 est différente de la station terrestre interactive 106. En effet, même si l'invention peut fonctionner avec une station terrestre principale située à côté de la station terrestre interactive (elles peuvent même ne constituer qu'une seule et même station), il peut être particulièrement intéressant d'avoir une station terrestre interactive localisée à un autre endroit, la récupération progressive des signaux émis par les terminaux interactifs n'ayant aucune raison de se faire au même endroit que la diffusion du signal broadcast.

Les étapes 204 à 214 qui suivent sont toutes réalisées au niveau de la station terrestre interactive.

Selon l'étape 204 du procédé selon l'invention, la station terrestre interactive 106 reçoit le signal agrégé diffusé par le satellite 101.

Selon l'étape 205, la station terrestre interactive 106 comporte des moyens pour échantillonner temporellement le signal agrégé.

Les échantillons du signal agrégé (par exemple des échantillons relativement courts sur une fenêtre d'échantillonnage de 400 ms) sont enregistrés dans une mémoire de travail A (étape 206).

Selon l'étape 207, la station terrestre interactive 106 démodule alors au sein de la mémoire de travail A, le premier signal détectable et démodulable ; en l'espèce, lors de la première itération, ce premier signal détectable et dé-modulable est le signal DVB-S2 transmis par la station terrestre principale 103 (cf. signal S de la figure 2). Cette première étape implique que la station terrestre interactive 106 soit équipée d'un modulateur/démodulateur DVB-S2. Lors des prochaines itérations, cette étape 207 sera réalisée sur les signaux transmis par les terminaux interactifs 104, d'abord sur les signaux présentant la plus forte amplitude puis, lors des itérations suivantes, sur les signaux présentant des amplitudes plus faibles (en référence à la figure 2, on commencera par le signal S3 puis le signal S2 puis le signal S1) ; on notera que plusieurs signaux d'amplitude comparable pourront bien entendu être traités à chaque itération. La station terrestre interactive 106 est également équipée au moyen d'un modulateur/démodulateur fonctionnant par exemple suivant un protocole asynchrone à accès aléatoire multiple à étalement de bande par modulation du type SPREAD ALOHA optimisé pour que la station terrestre interactive 106 puisse utiliser des moyens d'élimination d'interférences.

L'étape 207 de démodulation permet également de récupérer des informations sur les paramètres du répéteur 102 du satellite ; ces paramètres sont par exemple stockés dans une mémoire B (étape 208).

Selon l'étape 209, le signal démodulé est ensuite re-modulé de façon « propre » (i.e. sans perturbation des autres signaux présents dans le signal agrégé).

Selon l'étape 210, on applique sur le signal re-modulé certains effets déduits des paramètres (notamment des paramètres liés au répéteur 102) stockés dans la mémoire B. Dans la mesure où on traite ici un unique signal, seuls les effets linéaires qui sont spécifiques à ce signal sont appliqués (on obtiendra ainsi une image fidèle du traitement au niveau du répéteur lorsque ce signal sera ajouté aux autres signaux). A titre d'exemple, on applique ici les effets linéaires de la réponse du gain en fonction de la fréquence pour le signal modulé selon le premier protocole (ici DVB-S2) ; on appliquera de même les effets linéaires de la réponse du gain en fonction de la fréquence pour les signaux modulés selon le second protocole (protocole asynchrone à accès aléatoire multiple à étalement de bande par modulation du type SPREAD ALOHA) au fur et à mesure que les signaux seront obtenus lors des itérations successives. En effet, les effets linéaires de la réponse du gain en fonction de la fréquence, quoique linéaires, sont différents pour les signaux de forte amplitude (signal DVB-S2 issu de la station terrestre principale 103) et pour les signaux de plus faibles amplitudes issus des terminaux terrestres interactifs 104.

Tous les signaux obtenus lors des différentes itérations successives démodulés puis re-modulés et traités (notamment par les effets linéaires de la réponse du gain en fonction de la fréquence) sont ensuite cumulés dans une mémoire C (étape 211).

Selon l'étape 212, on applique sur le signal obtenu lors de l'étape 211 des effets non linéaires et certains effets linéaires déduits des paramètres stockés dans la mémoire B. Ces effets linéaires (effet Doppler lié au satellite) et non linéaires sont ceux qui sont communs à tous les signaux de sorte qu'il est logique de les appliquer au signal cumulé plutôt qu'à chaque signal pris isolément en fonction de son amplitude. Les effets non linéaires introduits lors de la phase d'amplification par le répéteur sont appliqués ici car ils sont très dépendants de l'amplitude totale du signal (il est donc évidemment préférable d'appliquer ces effets non linéaires sur le signal cumulé).

Les effets non linéaires appliqués lors de cette étape 212 sont notamment :
- les effets non linéaires de la modulation d'amplitude sur amplitude AM/AM ;
- les effets non linéaires de la modulation d'amplitude sur phase AM/PM.

Le signal ainsi obtenu incluant tous les effets linéaires et non linéaires appliqués sur les signaux déjà détectés et démodulés lors de l'étape 212 est alors stocké dans une mémoire D (étape 213).

Selon l'étape 214, on élimine, au sein de l'échantillon du signal agrégé initial stocké dans la mémoire de travail A, le signal stocké dans la mémoire D obtenu lors de l'étape 213. On obtient ainsi un nouveau signal agrégé retraité sur lequel on va réitérer les étapes 207 à 214 de façon à pouvoir récupérer les signaux de plus faible amplitude.

Il convient de noter que l'étape 212 d'application des effets non linéaires est toujours réalisée sur le signal cumulé (incluant l'ensemble des signaux détectés et démodulés) et que l'étape 214 d'élimination se fait toujours à partir du signal agrégé initial.

L'itération des étapes 207 à 214 s'arrête lorsque le nombre d'itérations a atteint une valeur seuil donnée ou lorsqu'une nouvelle itération ne permet pas de détecter et démoduler de nouveaux signaux au sein dudit signal agrégé retraité.

Lorsqu'on arrête les itérations, on passe au traitement d'un échantillon suivant l'échantillon déjà traité dans la mémoire de travail A. De manière préférentielle, on passe à un autre échantillon sur une fenêtre d'échantillonnage recouvrant légèrement la précédente ; on parle de fenêtre glissante (« sliding window » selon la terminologie anglaise). On aura par exemple un recouvrement de l'ordre de 50 à 100 ms pour un échantillon ayant une largeur de 400 ms.

## Revendications

1. Procédé pour l'établissement de liaisons radiofréquences dans un réseau de télécommunication (100) comportant :
- un satellite (101) de télécommunication comportant un répéteur (102) pour la réception de signaux situés dans une plage déterminée de fréquences en voie montante à l'intérieur d'une bande de fréquences d'utilisation en voie montante, l'amplification desdits signaux, la conversion en fréquence desdits signaux et la transmission vers la terre desdits signaux situés dans une plage déterminée de fréquences en voie descendante à l'intérieur d'une bande de fréquences d'utilisation en voie descendante;
- une station terrestre principale (103) comportant des moyens de diffusion vers ledit satellite (101) de télécommunication de signaux modulés selon un premier protocole et occupant au moins une portion de ladite plage de fréquences en voie montante ;
- une pluralité de terminaux interactifs (104), chacun desdits terminaux interactifs comportant des moyens pour recevoir les signaux émis par ledit répéteur en provenance de ladite station terrestre principale, et des moyens pour émettre vers ledit satellite de télécommunication des signaux modulés selon un second protocole et occupant au moins une partie de ladite portion de ladite plage de fréquences en voie montante, ledit second protocole étant différent du premier protocole et étant un protocole à étalement de spectre ;
- une station terrestre interactive (106) comportant des moyens pour recevoir les signaux émis par ledit répéteur en provenance des terminaux interactifs (104) et de la station terrestre principale (103) ;
ledit procédé comportant les étapes suivantes :
- émission par ladite station terrestre principale (103) d'un signal modulé selon le premier protocole et occupant ladite portion de la plage de fréquences en voie montante;
- émission par lesdits terminaux interactifs (104) d'une pluralité de signaux modulés selon le second protocole et occupant au moins une partie de ladite portion de ladite plage de fréquences en voie montante de sorte que ladite pluralité de signaux est superposée en fréquence au signal diffusé par ladite station terrestre principale (103) ;
- réception par ledit satellite (101) desdits signaux modulés selon le second protocole et dudit signal modulé selon le premier protocole, lesdits signaux modulés selon le second protocole étant reçus par ledit satellite (101) de télécommunication avec une amplitude totale inférieure à l'amplitude du signal diffusé par ladite station terrestre principale (103) et lesdits signaux modulés selon le second protocole étant reçus par ledit satellite (101) de télécommunication avec des amplitudes différentes ;
- passage desdits signaux modulés selon le second protocole et dudit signal modulé selon le premier protocole au sein dudit répéteur (102), l'ensemble desdits signaux étant amplifiés avec des effets non linéaires par ledit répéteur ;
- transmission par ledit satellite (101) vers la terre d'un signal agrégé comportant lesdits signaux modulés selon le second protocole et ledit signal modulé selon le premier protocole amplifiés par ledit répéteur ;
- réception par lesdits terminaux interactifs (104) dudit signal agrégé et démodulation du signal émis par la station terrestre principal (103) modulé selon le premier protocole ;
- réception par ladite station terrestre interactive (106) dudit signal agrégé, dit signal agrégé initial ;
- élimination, par ladite station terrestre interactive (106), au sein dudit signal agrégé initial dudit signal modulé selon le premier protocole de sorte qu'on obtient un signal agrégé retraité ;
ledit procédé comportant également :
- une étape i) de démodulation (207) par ladite station terrestre interactive, à partir dudit signal agrégé retraité, des signaux modulés selon le second protocole présentant l'amplitude la plus élevée parmi l'ensemble des signaux modulés selon le second protocole présents dans le signal agrégé retraité ;
- une étape ii) de re-modulation (209) selon ledit second protocole par ladite station terrestre interactive desdits signaux démodulés à l'étape précédente ;
- une étape iii) de génération (210, 211, 212) par ladite station terrestre interactive d'un signal incluant ledit signal modulé selon le premier protocole et lesdits signaux re-modulés selon le second protocole auxquels sont appliqués les effets linéaires et non linéaires de l'amplification du répéteur ;
- une étape iv) d'élimination (214) au sein dudit signal agrégé initial dudit signal simulé lors de l'étape précédente de sorte qu'on obtient un nouveau signal agrégé retraité
les étapes i) à iv) étant réitérées sur le nouveau signal agrégé retraité, le niveau d'interférence au sein du signal agrégé retraité diminuant à chaque itération.

2. Procédé selon la revendication précédente **caractérisé en ce que** ledit réseau de télécommunication comporte une pluralité de terminaux non interactifs de réception uniquement, chacun desdits terminaux non interactifs comportant des moyens pour recevoir les signaux émis par ledit répéteur en provenance de ladite station terrestre principale, ledit procédé comportant une étape de réception par lesdits terminaux non interactifs dudit signal agrégé et de démodulation du signal émis par la station terrestre principal modulé selon le premier protocole.

3. Procédé selon la revendication précédente **caractérisé en ce que** certains desdits terminaux non interactifs étaient déjà installés et opérationnels avant la mise en service des terminaux interactifs.

4. Procédé selon l'une des revendications précédentes **caractérisé en ce que** ledit second protocole est un protocole à accès aléatoire multiple asynchrone ou synchrone.

5. Procédé selon l'une des revendications précédentes **caractérisé en ce que** ledit premier protocole est mis en oeuvre selon l'une des normes suivantes :
- DVB-S ;
- DVB-S2 ;
- DVB-SH.

6. Procédé selon l'une des revendications précédentes **caractérisée en ce que** ladite bande de fréquences d'utilisation en voie montante appartient à la bande Ku ou à la bande Ka.

7. Procédé selon l'une des revendications précédentes **caractérisé en ce que** ladite station terrestre principale est localisée en un lieu différent de ladite station terrestre interactive.

8. Procédé selon l'une des revendications précédentes **caractérisé en ce que** les effets de l'amplification du répéteur de l'étape iii) incluent un ou plusieurs des effets suivants :
- effet non linéaire de la modulation d'amplitude sur amplitude AM/AM ;
- effet non linéaire de la modulation d'amplitude sur phase AM/PM ;
- effet linéaire de la réponse du gain en fonction de la fréquence pour le signal modulé selon le premier protocole ;
- effet linéaire de la réponse du gain en fonction de la fréquence pour les signaux modulés selon le second protocole.

9. Procédé selon l'une des revendications précédentes **caractérisé en ce qu'**il comporte une étape d'envoi par ladite station terrestre principale d'informations de signalisation vers lesdits terminaux interactifs.

10. Procédé selon la revendication précédente **caractérisé en ce que** l'étape d'envoi desdites informations de signalisation consiste à informer lesdits terminaux d'un niveau ou d'une plage de niveaux de puissance d'émission à utiliser.

11. Procédé selon l'une des revendications **caractérisé en ce que** le processus itératif s'arrête lorsque le nombre d'itérations a atteint une valeur seuil donnée ou lorsqu'une nouvelle itération ne permet pas de détecter et démoduler de nouveaux signaux au sein dudit signal agrégé retraité.

12. Procédé selon l'une des revendications précédentes **caractérisé en ce que** le signal agrégé reçu est échantillonné, lesdits échantillons étant mémorisés dans un espace mémoire, et les opérations d'élimination des signaux détectés et démodulés étant effectués en modifiant successivement le contenu dudit espace de mémoire à chaque arrêt du processus itératif.

13. Procédé selon l'une des revendications précédentes **caractérisé en ce que** ladite étape d'élimination par ladite station terrestre interactive dudit signal modulé selon le premier protocole comporte les étapes suivantes :
- une étape de démodulation par ladite station terrestre interactive, à partir dudit signal agrégé, du signal modulé selon le premier protocole ;
- une étape de re-modulation selon ledit premier protocole par ladite station terrestre interactive dudit signal démodulé à l'étape précédente ;
- une étape de génération par ladite station terrestre interactive d'un signal incluant ledit signal re-modulé selon le premier protocole auxquels sont appliqués les effets linéaires et non linéaires de l'amplification du répéteur ;
- une étape d'élimination au sein dudit signal agrégé initial dudit signal simulé lors de l'étape précédente de sorte qu'on obtient ledit signal agrégé retraité.

14. Réseau de télécommunication pour la mise en oeuvre du procédé selon l'une des revendications précédentes comportant :
- un satellite de télécommunication comportant un répéteur pour la réception de signaux situés dans une plage déterminée de fréquences en voie montante à l'intérieur d'une bande de fréquences d'utilisation en voie montante, l'amplification desdits signaux, la conversion en fréquence desdits signaux et la transmission vers la terre desdits signaux situés dans une plage déterminée de fréquences en voie descendante à l'intérieur d'une bande de fréquences d'utilisation en voie descendante;
- une station terrestre principale comportant des moyens de diffusion vers ledit satellite de télécommunication de signaux modulés selon un premier protocole et occupant au moins une portion de ladite plage de fréquences en voie montante ;
- une pluralité de terminaux interactifs, chacun desdits terminaux interactifs comportant des moyens pour recevoir les signaux émis par ledit répéteur en provenance de ladite station terrestre principale, et des moyens pour émettre vers ledit satellite de télécommunication des signaux modulés selon un second protocole et occupant au moins une partie de ladite portion de ladite plage de fréquences en voie montante de sorte que ladite pluralité de signaux est superposée en fréquence au signal diffusé par ladite station terrestre, ledit second protocole étant différent du premier protocole et étant un protocole à étalement de spectre, lesdits signaux modulés selon le second protocole étant reçus par ledit satellite de télécommunication avec une amplitude totale inférieure à l'amplitude du signal diffusé par ladite station terrestre principale et lesdits signaux modulés selon le second protocole étant reçus par ledit satellite de télécommunication avec des amplitudes différentes ;
- une station terrestre interactive comportant des moyens pour recevoir les signaux émis par ledit répéteur en provenance des terminaux interactifs et de la station terrestre principale ;
ledit réseau étant **caractérisé en ce que** :
- ledit satellite comporte en outre des moyens de transmission vers la terre d'un signal agrégé comportant lesdits signaux modulés selon le second protocole et ledit signal modulé selon le premier protocole amplifiés par ledit répéteur ;
- lesdits terminaux interactifs comportent des moyens de réception dudit signal agrégé et de démodulation du signal émis par la station terrestre principal modulé selon le premier protocole ;
- ladite station terrestre interactive comporte :
o des moyens de réception dudit signal agrégé, dit signal agrégé initial ;
o des moyens d'élimination au sein dudit signal agrégé initial dudit signal modulé selon le premier protocole de sorte qu'on obtient un signal agrégé retraité ;
o des moyens de démodulation, à partir dudit signal agrégé retraité, des signaux modulés selon le second protocole présentant l'amplitude la plus élevée parmi l'ensemble des signaux modulés selon le second protocole présents dans le signal agrégé retraité ;
o des moyens de re-modulation selon ledit second protocole desdits signaux démodulés ;
o des moyens de génération d'un signal incluant ledit signal modulé selon le premier protocole et lesdits signaux re-modulés selon le second protocole auxquels sont appliqués les effets linéaires et non linéaires de l'amplification du répéteur ;
o des moyens d'élimination au sein dudit signal agrégé initial dudit signal simulé de sorte qu'on obtient un nouveau signal agrégé retraité.

## Patentansprüche

1. Verfahren für die Herstellung von Funkfrequenzverbindungen in einem Telekommunikationsnetz (100), umfassend:
- einen Telekommunikationssatelliten (101), die einen Verstärker (102) für den Empfang von Signalen, die sich in einem bestimmten Frequenzbereich in aufsteigender Bahn im Innern eines Nutzungsfrequenzbandes in aufsteigender Bahn befinden, die Verstärkung der genannten Signale, die Umwandlung der genannten Signale in Frequenzen und die Übertragung der genannten Signale, die sich in einem bestimmten Frequenzbereich in absteigender Bahn im Innern eines Nutzungsfrequenzbereichs in absteigender Bahn zur Erde befinden, umfasst;
- eine terrestrische Hauptstation (103), die Sendemittel von gemäß einem ersten Protokoll modulierten Signalen zu dem genannten Satelliten (101) und die wenigstens einen Abschnitt des genannten Frequenzbereichs in aufsteigender Bahn belegen, umfasst:
- eine Vielzahl von interaktiven Terminals (104), wobei jedes der genannten interaktiven Terminals Mittel für den Empfang der Signale umfasst, die von dem genannten Verstärker ausgehend von der genannten terrestrischen Hauptstation gesendet werden, und Mittel zum Senden der gemäß einem zweiten Protokoll modulierten Signale zu der genannten Telekommunikationsstation, und die wenigstens einen Teil des genannten Abschnitts des genannten Frequenzbandes in aufsteigender Bahn belegen, wobei das genannte zweite Protokoll unterschiedlich ist von dem ersten Protokoll und ein Protokoll mit Spektralspreizung ist;
- eine interaktive terrestrische Station (106), die Mittel für den Empfang der Signale umfasst, die von dem genannten Verstärker ausgehend von interaktiven Terminals (104) und der terrestrischen Hauptstation (103) gesendet werden.
wobei das genannte Verfahren die folgenden Schritte umfasst:
- Senden eines gemäß dem ersten Protokoll modulierten und den genannten Abschnitt des Frequenzbereichs in aufsteigender Bahn belegenden Signals durch die genannte terrestrische Hauptstation (103;
- Senden einer Vielzahl von gemäß dem zweiten Protokoll modulierten und wenigstens einen Teil des genannten Abschnitts des genannten Frequenzbereichs in aufsteigender Bahn belegenden Signale durch die genannten interaktiven Terminals (104) derart, dass die genannte Vielzahl von Signalen in der Frequenz dem Signal überlagert wird, das durch die terrestrische Hauptstation (103) gesendet wird;
- Empfang der genannten gemäß dem zweiten Protokoll modulierten Signale und des genannten gemäß dem ersten Protokoll modulierten Signals durch den genannten Satelliten (101), wobei die genannten gemäß dem zweiten Protokoll modulierten Signale durch den genannten Telekommunikationssatelliten (101) mit einer Gesamtamplitude empfangen werden, die niedriger ist als die Amplitude des Signals, das von der genannten terrestrischen Hauptstation (103) gesendet wird und die genannten gemäß dem zweiten Protokoll modulierten Signale durch den genannten Telekommunikationssatelliten (101) mit unterschiedlichen Amplituden empfangen werden;
- Übergang der genannten, gemäß dem zweiten Protokoll modulierten Signale und des genannten, gemäß dem ersten Protokoll modulierten Signals innerhalb des genannten Verstärkers (102), wobei alle genannten Signale mit nicht linearen Effekten durch den genannten Verstärker verstärkt werden;
- Übertragung eines aggregierten Signals auf die Erde durch den genannten Satelliten (101), umfassend die genannten gemäß dem zweiten Protokoll modulierten Signale und das genannte, gemäß dem ersten Protokoll modulierte, von dem genannten Verstärker verstärkte Signal;
- Empfang des genannten aggregierten Signals durch die genannten interaktiven Terminals (104) und Demodulation des durch die terrestrische Hauptstation (103) gesendeten, gemäß dem ersten Protokoll modulierten Signals;
- Empfang des genannten aggregierten Signals, bezeichnet als aggregiertes anfängliches Signal, durch die genannte interaktive terrestrische Station (106);
- Eliminierung des genannten, gemäß dem ersten Protokoll modulierten Signals innerhalb des genannten aggregierten, anfänglichen Signals derart, dass ein aggregiertes, aufbereitetes Signal empfangen wird;
wobei das genannte Protokoll ebenfalls umfasst:
- einen Schritt i) der Demodulation (207) durch die genannte interaktive terrestrische Station ausgehend von dem genannten aggregierten Signal, wobei die gemäß dem zweiten Protokoll modulierten Signale die höchste Amplitude aus allen gemäß dem zweiten Protokoll modulierten Signalen aufweist, die in dem aggregierten aufbereiteten Signal vorhanden sind;
- einen Schritt ii) der Remodulation (209) gemäß dem genannten zweiten Protokoll durch die genannte interaktive terrestrische Station der genannten, in dem voranstehenden Schritt demodulierten Signale;
- einen Schritt iii) der Generation (210, 211, 212) eines Signals durch die genannte interaktive terrestrische Station, das das gemäß dem ersten Protokoll modulierte Signal und die genannten, gemäß dem zweiten Protokoll remodulierten Signale einschließt, auf die die linearen Effekte und die nicht linearen Effekte der Verstärkung des Verstärkers angewendet werden;
- einen Schritt iv) der Eliminierung (214) innerhalb des genannten aggregierten anfänglichen Signals des genannten simulierten Signals bei dem voranstehenden Schritt derart, dass ein neues, aufbereitetes aggregiertes Signal erhalten wird,
wobei die Schritte i) bis iv) auf dem neuen, aufbereiteten aggregierten Signal wiederholt werden, wobei das Interferenzniveau innerhalb des aufbereiteten aggregierten Signals bei jeder Iteration abnehmen.

2. Verfahren gemäß dem voranstehenden Anspruch, **dadurch gekennzeichnet, dass** das genannte Telekommunikationsnetz eine Vielzahl von nicht interaktiven, ausschließlich Empfangsterminals umfasst, wobei jedes der genannten nicht interaktiven Terminals Mittel für den Empfang der Signale umfasst, die von dem genannten Verstärker ausgehend von der genannten terrestrischen Hauptstation gesendet werden, wobei das genannte Verfahren einen Empfangsschritt des genannten aggregierten Signals durch die genannten nicht interaktiven Terminals und der Demodulation des gemäß dem ersten Protokoll modulierten Signals, das von der terrestrischen Hauptstation gesendet wird, umfassen.

3. Verfahren gemäß dem voranstehenden Anspruch, **dadurch gekennzeichnet, dass** einige der genannten nicht interaktiven Terminals bereits vor der Inbetriebnahme der interaktiven Terminals installiert und betriebsbereit waren.

4. Verfahren gemäß einem der voranstehenden Ansprüche, **dadurch gekennzeichnet, dass** das genannte zweite Protokoll ein Protokoll mit synchronem oder asynchronem, multiplem, aleatorischen Zugang ist.

5. Verfahren gemäß einem der voranstehenden Ansprüche, **dadurch gekennzeichnet, dass** das genannte ersten Protokoll gemäß einer der folgenden Normen umgesetzt wird:
- DVB-S;
- DVB-S2;
- DVB-SH.

6. Verfahren gemäß einem der voranstehenden Ansprüche, **dadurch gekennzeichnet, dass** der genannten Nutzungsfrequenzbereich in aufsteigender Bahn zu dem Bereich K oder dem Bereich Ka gehört.

7. Verfahren gemäß einem der voranstehenden Ansprüche, **dadurch gekennzeichnet, dass** die genannte terrestrische Hauptstation an einem von der genannten interaktiven terrestrischen Station unterschiedlichen Ort lokalisiert ist.

8. Verfahren gemäß einem der voranstehenden Ansprüche, **dadurch gekennzeichnet, dass** die Effekte der Verstärkung des Verstärkers des Schritts iii) einen oder mehrere der folgenden Effekte einschließen:
- nicht linearer Effekt der Amplitudenmodulation auf der Amplitude AM/AM;
- nicht linearer Effekt der Amplitudenmodulation auf der Phrase AM/PM;
- linearer Effekt der Antwort der Verstärkung in Abhängigkeit von der Frequenz für das gemäß dem ersten Protokoll modulierte Signal;
- linearer Effekt der Antwort der Verstärkung in Abhängigkeit von der Frequenz für die gemäß dem zweiten Protokoll modulierten Signale.

9. Verfahren gemäß einem der voranstehenden Ansprüche, **dadurch gekennzeichnet, dass** es einen Versandschritt von Signalisationsinformationen zu den genannten interaktiven Terminals durch die genannte terrestrische Hauptstation umfasst.

10. Verfahren gemäß dem voranstehenden Anspruch, **dadurch gekennzeichnet, dass** der Versandschritt der genannten Signalisationsinformationen in der Information der genannten Terminals eines zu verwendenden Niveaus oder Sendeleistungsniveaus besteht.

11. Verfahren gemäß einem der Ansprüche, **dadurch gekennzeichnet, dass** der iterative Prozess endet, wenn die Anzahl von Iterationen einen bestimmten Schwellenwert erreicht hat oder wenn eine neue Iteration die Detektion und die Demodulation von neuen Signalen innerhalb des genannten aufbereiteten aggregierten Signals nicht zulässt.

12. Verfahren gemäß einem der voranstehenden Ansprüche, **dadurch gekennzeichnet, dass** das empfangene aggregierte Signal verprobt ist, wobei die genannten Proben in einem Speicherplatz gespeichert sind und die Eliminierungsoperationen der detektierten und demodulierten Signale per sukzessiver Modifizierung des Inhaltes des genannten Speicherplatzes bei jeder Abschaltung des iterativen Prozesses durchgeführt werden.

13. Verfahren gemäß einem der voranstehenden Ansprüche, **dadurch gekennzeichnet, dass** der genannte Eliminierungsschritt durch die genannte interaktive terrestrische Station des genannten, gemäß dem ersten Protokoll modulierten Signals die folgenden Schritte umfasst:
- einen Demodulationsschritt des gemäß dem ersten Protokoll modulierten Signals durch die genannte interaktive terrestrische Station ausgehend von dem genannten aggregierten Signal;
- einen Remodulationsschritt des genannten, in dem voranstehenden Schritt demodulierten Signals gemäß dem genannten ersten Protokoll durch die genannte interaktive terrestrische Station;
- einen Generationsschritt eines Signals, das das genannte, durch das erste Protokoll modulierte Signal einschließt, auf die die linearen Effekte und die nicht linearen Effekte der Verstärkung des Verstärkers angewendet werden, durch die genannte interaktive terrestrische Station;
- einen Eliminierungsschritt innerhalb des genannten anfänglichen aggregierten Signals des genannten simulierten Signals bei dem voranstehenden Schritt derart, dass das genannte aufbereitete aggregierte Signal erhalten wird.

14. Telekommunikationsnetz für die Umsetzung des Verfahrens gemäß einem der voranstehenden Ansprüche, umfassend:
- einen Telekommunikationssatelliten, umfassend einen Verstärker für den Empfang von Signalen, die sich in einem bestimmten Frequenzbereich in aufsteigender Bahn im Innern eines Nutzungsfrequenzbereichs in aufsteigender Bahn befinden, die Verstärkung der genannten Signale, die Umwandlung der genannten Signale in der Frequenz und die Übertragung der genannten Signale auf die Erde, die sich in einem bestimmten Frequenzbereich in absteigender Bahn im Innern eines Nutzungsfrequenzbereichs in absteigender Bahn befinden;
- eine terrestrische Hauptstation, umfassend Sendemittel von gemäß einem ersten Protokoll modulierten Signalen zu der genannten Telekommunikationsstation und die wenigstens einen Abschnitt des genannten Frequenzbereichs in aufsteigender Bahn belegen;
- eine Vielzahl von interaktiven Terminals, wobei jedes der interaktiven Terminals Mittel für den Empfang der Signale umfasst, die von dem genannten Verstärker ausgehend von der genannten terrestrischen Hauptstation gesendet werden, und Mittel zum Senden der gemäß einem ersten Protokoll modulierten Signale zu dem genannten Telekommunikationssatelliten und die wenigstens einen Teil des genannten Abschnitts des genannten Frequenzbereichs in aufsteigender Bahn derart belegen, dass die genannte Vielzahl von Signalen in der Frequenz dem Signal überlagert ist, das von der genannten terrestrischen Station gesendet wird, wobei das genannte zweite Protokoll unterschiedlich von dem ersten Protokoll ist und ein Protokoll mit Spektrumspreizung ist, wobei die genannten, gemäß dem zweiten Protokoll modulierten Signale durch den genannten Telekommunikationssatelliten mit einer Gesamtamplitude empfangen werden, die niedriger ist als die Amplitude des von der genannten terrestrischen Hauptamplitude gesendeten Signals und die genannten, gemäß dem zweiten Protokoll modulierten Signale durch den genannten Telekommunikationssatelliten mit unterschiedlichen Amplituden empfangen werden;
- eine interaktive terrestrische Station, umfassend Mittel für den Empfang der Signale, die von dem genannten Verstärker ausgehend von den interaktiven Terminals und der terrestrischen Hauptstation gesendet werden;
wobei das genannte Netz **dadurch gekennzeichnet ist, dass**:
- der genannte Satellit darüber hinaus Übertragungsmittel eines aggregierten Signals auf die Erde umfasst, das die genannten, gemäß dem zweiten Protokoll modulierten Signale und das gemäß dem ersten Protokoll modulierte Signal umfasst, die durch den genannten Verstärker verstärkt werden;
- wobei die genannten interaktiven Terminals Empfangsmittel des genannten aggregierten Signals und Demodulationsmittel des gemäß dem ersten Protokoll modulierten Signals umfassen, das von der terrestrischen Hauptstation gesendet wird;
- die genannte interaktive terrestrische Station umfasst:
o Empfangsmittel des genannten aggregierten Signals, bezeichnet als anfängliches aggregiertes Signal;
o Eliminierungsmittel innerhalb des genannten anfänglichen aggregierten Signals das genannten, gemäß dem ersten Protokoll modulierten Signals derart, dass ein aufbereitetes aggregiertes Signal erhalten wird;
o Demodulationsmittel der gemäß dem zweiten Protokoll modulierten Signale ausgehend von dem genannten aufbereiteten aggregierten Signal, die von allen gemäß dem zweiten Protokoll modulierten, in dem aufbereiteten aggregierten Signal vorhandenen Signalen die höchste Amplitude aufweisen;
o Remodulationsmittel gemäß dem genannten zweiten Protokoll der genannten demodulierten Signale;
o Generationsmittel eines Signals, das das genannte, gemäß dem ersten Protokoll modulierte Signal und die genannten, gemäß dem zweiten Protokoll remodulierten Signale einschließt, auf die die linearen Effekte und die nicht linearen Effekte der Verstärkung des Verstärkers angewendet werden;
o Eliminierungsmittel innerhalb des genannten anfänglichen aggregierten Signals des genannten simulierten Signals derart, dass ein neues aufbereitetes aggregiertes Signal erhalten wird.

## Claims

1. A method for establishing radiofrequency links in a telecommunication network (100) including:
- a telecommunication satellite (101) including a transponder (102) for receiving signals situated in a determined uplink frequency range inside an uplink usage frequency band, for amplifying said signals, frequency-converting said signals and transmitting to the ground said signals situated in a determined downlink frequency range inside a downlink usage frequency band;
- a principal terrestrial station (103) including means for broadcasting towards said telecommunication satellite (101) signals modulated according to a first protocol and occupying at least one portion of said uplink frequency range;
- a plurality of interactive terminals (104), each of said interactive terminals including means for receiving the signals transmitted by said transponder from said principal terrestrial station, and means for transmitting towards said telecommunication satellite signals modulated according to a second protocol and occupying at least one part of said portion of said uplink frequency range, said second protocol being different from the first protocol and being a spread spectrum protocol;
- an interactive terrestrial station (106) including means for receiving the signals transmitted by said transponder from the interactive terminals (104) and from the principal terrestrial station (103);
said method including the following steps:
- said principal terrestrial station (103) transmitting a signal modulated according to the first protocol and occupying said portion of the uplink frequency range;
- said interactive terminals (104) transmitting a plurality of signals modulated according to the second protocol and occupying at least one part of said portion of said uplink frequency range so that said plurality of signals is frequency-superimposed to the signal broadcast by said principal terrestrial station (103);
- said satellite (101) receiving said signals modulated according to the second protocol and said signal modulated according to the first protocol, said signals modulated according to the second protocol being received by said telecommunication satellite (101) with a total amplitude lower than the amplitude of a signal broadcast by said principal terrestrial station (103) and said signals modulated according to the second protocol being received by said telecommunication satellite (101) with different amplitudes;
- said signals modulated according to the second protocol and said signal modulated according to the first protocol passing within said transponder (102), all the signals being amplified with non-linear effects by said transponder;
- said satellite (101) transmitting to the ground an aggregated signal including said signals modulated according to the second protocol and said signal modulated according to the first protocol amplified by said transponder;
- said interactive terminals (104) receiving said aggregated signal and demodulating the signal transmitted by the principal terrestrial station (103) modulated according to the first protocol;
- said interactive terrestrial station (106) receiving said aggregated signal, referred to as the initial aggregated signal;
- said interactive terrestrial station (106) eliminating, within said initial aggregated signal, said signal modulated according to the first protocol so as to obtain a reprocessed aggregated signal;
said method also including:
- a step i) of demodulating (207) by said interactive terrestrial station, from said reprocessed aggregated signal, signals modulated according to the second protocol having the highest amplitude among all the signals modulated according to the second protocol present in the reprocessed aggregated signal;
- a step ii) of re-modulating (209) according to said second protocol by said interactive terrestrial station said signals demodulated at the previous step;
- a step iii) of generating (210, 211, 212) by said interactive terrestrial station a signal including said signal modulated according to the first protocol and said signals re-modulated according to the second protocol to which the linear and non-linear effects of the transponder amplification are applied;
- a step iv) of eliminating (214) within said initial aggregated signal said signal simulated during the previous step so as to obtain a new reprocessed aggregated signal steps i) to iv) being reiterated on the new reprocessed aggregated signal, the interference level within the reprocessed aggregated signal reducing at each iteration.

2. The method according to the previous claim, **characterized in that** said telecommunication network includes a plurality of receive-only non-interactive terminals, each of said non interactive terminals including means for receiving the signals transmitted by said transponder from said principal terrestrial station, said method including a step of receiving by said non interactive terminals said aggregated signal and of demodulating the signal transmitted by the principal terrestrial station modulated according to the first protocol.

3. The method according to the previous claim, **characterized in that** some of said non interactive terminals were already set up and operational before commissioning the interactive terminals.

4. The method according to one of the previous claims, **characterized in that** said second protocol is an asynchronous or synchronous multiple random access protocol.

5. The method according to one of the previous claims, **characterized in that** said first protocol is implemented according to one of the following standards:
- DVB-S;
- DVB-S2;
- DVB-SH.

6. The method according to one of the previous claims, **characterized in that** said uplink usage frequency band belongs to the Ku band or to the Ka band.

7. The method according to one of the previous claims, **characterized in that** said principal terrestrial station is located in a place different from said interactive terrestrial station.

8. The method according to one of the previous claims, **characterized in that** the effects of the transponder amplification of step iii) include one or more of the following effects:
- non-linear effect of the amplitude modulation on AM/AM amplitude;
- non-linear effect of the amplitude modulation on AM/PM phase;
- linear effect of the gain response as a function of the frequency for the signal modulated according to the first protocol;
- linear effect of the gain response as a function of the frequency for the signals modulated according to the second protocol.

9. The method according to one of the previous claims, **characterized in that** it includes a step of sending by said principal terrestrial station signalling information to said interactive terminals.

10. The method according to the previous claim, **characterized in that** the step of sending said signalling information consists in informing said terminals of a transmit power level or range of levels to be used.

11. The method according to one of the previous claims, **characterized in that** the iterative process stops when the number of iterations has reached a given threshold value or when a new iteration does not enable new signals to be detected and demodulated within said reprocessed aggregated signal.

12. The method according to one of the previous claims, **characterized in that** the received aggregated signal is sampled, said samples being stored in a memory space, and the operations for eliminating the detected and demodulated signals being carried out by successively modifying the content of said memory space at each stop of the iterative process.

13. The method according to one of the previous claims, **characterized in that** said step of eliminating by said interactive terrestrial station said signal modulated according to the first protocol includes the following steps:
- a step of demodulating by said interactive terrestrial station, from said aggregated signal, the signal modulated according to the first protocol;
- a step of re-modulating according to said first protocol by said interactive terrestrial station said signal demodulated at the previous step;
- a step of generating by said interactive terrestrial station a signal including said re-modulated signal according to the first protocol to which the linear and non-linear effects of the transponder amplification are applied;
- a step of eliminating within said initial aggregated signal said signal simulated during the previous step so as to obtain said reprocessed aggregated signal.

14. A telecommunication network for implementing the method according to one of the previous claims including:
- a telecommunication satellite including a transponder for receiving signals situated in a determined uplink frequency range inside an uplink usage frequency band, for amplifying said signals, frequency-converting said signals and transmitting to the ground said signals situated in a determined downlink frequency range inside a downlink usage frequency band;
- a principal terrestrial station including means for broadcasting towards said telecommunication satellite signals modulated according to a first protocol and occupying at least one portion of said uplink frequency range;
- a plurality of interactive terminals, each of said interactive terminals including means for receiving the signals transmitted by said transponder from said principal terrestrial station, and means for transmitting towards said telecommunication satellite signals modulated according to a second protocol and occupying at least one part of said portion of said uplink frequency range, so that said plurality of signals is frequency-superimposed to the signal broadcast by said terrestrial station, said second protocol being different from the first protocol and being a spread spectrum protocol, said signals modulated according to the second protocol being received by said telecommunication satellite with a total amplitude lower than the amplitude of the signal broadcast by said principal terrestrial station and said signals modulated according to the second protocol being received by said telecommunication satellite with different amplitudes;
- an interactive terrestrial station including means for receiving the signals transmitted by said transponder from the interactive terminals and the principal terrestrial station;
said network being **characterized in that**:
- said satellite further includes means for transmitting to the ground an aggregated signal including said signals modulated according to the second protocol and said signal modulated according to the first protocol amplified by said transponder;
- said interactive terminals include means for receiving said aggregated signal and for demodulating the signal transmitted by the principal terrestrial station modulated according to the first protocol;
- said interactive terrestrial station includes:
o means for receiving said aggregated signal, referred to as the initial aggregated signal;
o means for eliminating within said initial aggregated signal said signal modulated according to the first protocol so as to obtain a reprocessed aggregated signal;
o means for demodulating, from said reprocessed aggregated signal, signals modulated according to the second protocol having the highest amplitude among all the signals modulated according to the second protocol present in the reprocessed aggregated signal;
o means for re-modulating according to said second protocol said demodulated signals;
o means for generating a signal including said signal modulated according to the first protocol and said signals re-modulated according to the second protocol to which the linear and non-linear effects of the transponder amplification are applied;
o means for eliminating within said initial aggregated signal said simulated signal so as to obtain a new reprocessed aggregated signal.
